# EUROPÄISCHE PATENTSCHRIFT

(11) **EP 3 335 917 B1**
(45) Veröffentlichungstag und Bekanntmachung des Hinweises auf die Patenterteilung: **07.07.2021**
(21) Anmeldenummer: 17207070.8
(22) Anmeldetag: 13.12.2017
(51) Int. Cl.: B60G 17/056, B60G 17/052

(54) **LUFTFEDERANLAGE FÜR EINEN KRAFTWAGEN**
AIR SPRING DEVICE FOR A MOTOR VEHICLE
DISPOSITIF D'AMORTISSEMENT PNEUMATIQUE POUR UN VÉHICULE AUTOMOBILE

(30) Priorität: 13.12.2016 DE 102016124253
(43) Veröffentlichungstag der Anmeldung: 20.06.2018
(73) Patentinhaber: Gudzulic, Miro, 82346 Andechs (DE)
(72) Erfinder: Gudzulic, Miro, 82346 Andechs (DE)
(74) Vertreter: Hofstetter, Schurack & Partner

(56) Entgegenhaltungen:
- DE-A1-102009 025 970
- DE-A1-102010 064 460
- DE-A1-102011 011 628
- JP-A- H01 293 211
- US-A- 2 882 068
- US-A- 3 736 003
- US-A- 4 897 776
- US-A- 5 322 321

## Beschreibung

Die Erfindung betrifft eine Luftfederanlage für ein Fahrzeug gemäß dem Oberbegriff des Patentanspruchs 1. Des Weiteren betrifft die Erfindung eine Versorgungseinheit für eine derartige Luftfederanlage gemäß dem Oberbegriff des Patentanspruchs 9.

Eine derartige Luftfederanlage ist aus der DE 10 2011 011 628 A1 bekannt und umfasst wenigstens eine Luftfeder, die über eine zugeordnete Versorgungseinheit mit Druckluft versorgbar ist, welche einen Druckluftspeicher umfasst, aus welchem die Luftfeder mit Druckluft versorgbar ist und in welchen Druckluft aus der Luftfeder über einen Druckerzeuger rückführbar ist. Eine ähnliche Luftfederanlage ist überdies aus der DE 10 2009 025 970 A1 bekannt.

Überdies ist aus der JP H01 293211 A eine Steuereinrichtung für eine aktive Federung bekannt, mit einem Niederdruckluftspeicher und einem Hochdruckluftspeicher. Die beiden Druckluftspeicher sind über einen Kompressor fluidisch miteinander verbunden.

Des Weiteren ist aus der US 4 897 776 A ein elektronisch steuerbares Luftfedersystem mit mehreren Luftfedern und einem Luftkreislauf bekannt. Der Luftkreislauf umfasst einen Kompressor, mittels welchem Druckluft für die Luftfedern bereitstellbar ist. Darüber hinaus umfasst der Luftkreislauf Hochdruckluftspeichertanks und Niederdruckluftspeichertanks, welche jeweils fluidisch mit den Luftfedern verbunden sind. Das Luftsystem umfasst ein Rückschlagventil, über welches Umgebungsluft stromauf des Kompressors in den Luftkreislauf einleitbar ist.

Darüber hinaus offenbart die US 3 736 003 A ein Kraftfahrzeugluftfederungssystem mit einem geschlossenen Luftkreislauf. Dieser Luftkreislauf umfasst einen Niederdrucktank und einen Hochdrucktank sowie einen Kompressor, über welchen die beiden Tanks fluidisch miteinander verbunden sind. Beide Tanks sind mit einer Luftfeder verbunden. Über einen Umgebungslufteinlass ist Umgebungsluft in den Luftkreislauf einspeisbar, wobei der Umgebungslufteinlass stromauf des Kompressors angeordnet ist.

Eine weitere Luftfederanlage ist schließlich aus der DE 10 2010 064 460 A1 bekannt. Hierbei umfasst die Luftfederanlage eine Versorgungseinheit, mittels welcher die Luftfedern einer oder mehrerer Fahrzeugachsen mit Luft aus einem Druckluftspeicher versorgt werden können. Wird aus der jeweiligen Luftfeder das Medium abgelassen, wie dies im normalen Fahrbetrieb beispielsweise von Fahrzeugen erfolgen kann oder beispielsweise bei Bussen auch, wenn diese an Haltestellen auf der zugewandten Fahrzeugseite abgesenkt werden, so wird die aus den Luftfedern entlassene Luft mittels eines Druckerzeugers in den Druckluftspeicher zurück gepumpt. Gegenüber offenen Systemen, bei denen die aus der jeweiligen Luftfeder abgelassene Luft mit einer entsprechenden Geräuschentwicklung ins Freie entlassen wird, ist somit bereits ein geschlossenes System zur Rückführung und Wiederverwendung der abgelassenen Luft geschaffen, um Energie einzusparen.

Aufgabe der vorliegenden Erfindung ist es daher, eine Luftfederanlage und eine zugehörige Versorgungseinheit der eingangs genannten Art zu schaffen, mittels welchen einerseits ein noch Energie sparender Betrieb der Luftfederanlage mit einem noch geräuschärmeren und schnelleren Senken des Fahrzeugs möglich ist, und welche andererseits einen besonders geringen Bauraumbedarf aufweisen.

Diese Aufgabe wird erfindungsgemäß durch eine Luftfederanlage mit den Merkmalen des Patentanspruchs 1 beziehungsweise durch eine Versorgungseinheit mit den Merkmalen des Patentanspruchs 9 gelöst. Vorteilhafte Ausgestaltungen mit zweckmäßigen Weiterbildungen der Erfindung sind Gegenstand der abhängigen Ansprüche.

Um eine Luftfederanlage der eingangs genannten Art zu schaffen, mittels welcher ein noch Energie sparender Betrieb mit einem noch geräuschärmeren und schnelleren Senken des Fahrzeugs möglich ist, ist es vorgesehen, dass die Versorgungseinheit wenigstens einen zweiten Druckluftspeicher umfasst, welcher zwischen der Luftfeder und dem Druckerzeuger angeordnet ist. Somit wird Luft zunächst aus der jeweiligen Luftfeder in den weiteren - beim Ablassen der Luft aus der jeweiligen Luftfeder somit - vorderen Druckluftspeicher entlassen, um von dort aus mittels des Druckerzeugers in den dahinter angeordneten zweiten Druckluftspeicher gefördert zu werden. Der Vorteil eines derartigen Systems ist zunächst, dass aus den Luftfedern abgelassene Luft sich zunächst in dem ersten, vorderen Druckluftspeicher sammeln kann, und zwar bis zu einem maximalen Druck, welcher demjenigen in der jeweiligen Luftfeder beim beziehungsweise nach dem Ablassen der Luft entspricht. Dies bedeutet, dass bei einem kurzzeitigen Ablassvorgang von Luft nicht ständig der Druckerzeuger anspringen muss, um die Druckluft in den weiteren, hinter dem Druckerzeuger liegenden Druckluftspeicher zu fördern, was zunächst zu einer erheblichen Energieeinsparung und einer Reduzierung der Geräusche infolge der kürzeren Laufzeit des Druckerzeugers führt. Durch den weiteren Druckluftspeicher muss somit der Kompressor oder dergleichen Verdichter nicht zwingendermaßen eingeschaltet werden, um die jeweiligen Luftfedern zu entlüften.

Des Weiteren dient der erste, vordere Druckluftspeicher als Puffer, so dass Luft aus der jeweiligen Luftfeder sehr schnell entlassen werden kann, welche dann im Weiteren durch den Druckerzeuger in den hinteren, zweiten Druckspeicher gepumpt werden kann, beziehungsweise dass das Fahrzeug sehr schnell abgelassen werden. Dies bedeutet, dass der Druckerzeuger somit keinen Flaschenhals beim Ablassen der Luft aus der jeweiligen Luftfeder bildet, sondern dass diese Luft zunächst im ersten, vorderen Druckluftspeicher aufgenommen werden kann und mit einiger Zeitverzögerung dann mittels des Druckerzeugern in den zweiten, hinteren Druckluftspeicher gefördert werden kann. Da somit dieses System nicht so sehr von der Förderleistung des Druckerzeugers abhängt, kann dieser gegebenenfalls sogar mit kleinerer Fördermenge ausgelegt werden, was zu einer zusätzlichen Einsparung von Energie führt.

Die Problematik des Energiebedarfs zeigt sich beispielsweise anhand eines Busses, insbesondere eines Niederflurbusses, wie dieser beispielsweise in Großstädten tausendfach zum Einsatz kommt, zukünftig verstärkt als elektrobetriebenes Fahrzeug beispielsweise mit Hybrid- oder ausschließlichem Elektroantrieb. Gerade bei derartigen Fahrzeugen ist ein Energie sparender Umgang für deren Reichweite und Effizienz von erheblicher Bedeutung.

Um erfindungsgemäß eine Luftfederanlage zu schaffen, mittels welchen einerseits ein noch Energie sparender Betrieb der Luftfederanlage mit einem noch geräuschärmeren und schnelleren Senken des Fahrzeugs möglich ist, und welche andererseits einen geringen Bauraumbedarf aufweist, ist es erfindungsgemäß vorgesehen, dass dass die Versorgungseinheit wenigstens einen weiteren Druckluftspeicher umfasst, über welchen der Druckluftspeicher mit Druckluft befüllbar ist. Somit ist zur alternativen Befüllung des Druckluftspeichers mit Druckluft ein interner weiterer Druckluftspeicher vorgesehen, welcher beispielsweise ein Volumen von lediglich 10 I aufweist und mit Druckluft mit einem Druck von (maximal) 100 bar befüllt ist. Ein derartiger Druckluftspeicher nimmt extrem wenig Platz ein und ist demzufolge bestens für eine Notbefüllung geeignet.

In weiterer Ausgestaltung der Erfindung umfasst die Versorgungseinheit wenigstens ein Pilotventil, welches zwischen der Luftfeder und dem Druckerzeuger angeordnet ist. Dieses Pilotventil ist vorzugsweise auch dasjenige Ventil, welches eine oder mehrere der Luftfedern gegen ein Einströmen beziehungsweise Ausströmen von Luft verschließt. Somit hat dieses Pilotventil beispielsweise eine Doppelfunktion, nämlich einerseits die jeweilige Luftfeder vom ersten, vorderen Druckluftspeicher zu trennen beziehungsweise zu verbinden und andererseits die Druckluft in der jeweiligen Luftfeder zu halten.

Eine weitere vorteilhafte Ausführungsform der Erfindung sieht vor, dass die Versorgungseinheit mit Druckluft versorgbar ist, welche mit einer Hauptversorgung für Druckluft verbunden ist. Das an sich geschlossene System der Versorgungseinheit kann somit auf einfache Weise beispielsweise durch das zentrale Luftdrucksystem als Hauptversorgung befüllt werden, beispielsweise vor dem Fahrbetrieb. Somit muss der jeweilige Druckerzeuger nur dazu ausgelegt sein, Druckluft innerhalb des geschlossenen Systems zu fördern. Alternativ hierzu wäre es jedoch auch denkbar, dass der Druckerzeuger, insbesondere auch als einziger Druckerzeuger für Druckluft in dem geschlossenen System der Versorgungseinheit, einen Rohlufteinlass aufweist. Somit kann jede Versorgungseinheit theoretisch autark von einer Hauptversorgung betrieben werden, beispielsweise bei einem Fahrzeug, welches gar kein zentrales Luftdrucksystem als Hauptversorgung hat.

In diesem Zusammenhang ist es auch denkbar, dass die jeweilige Versorgungseinheit einerseits mit einer Hauptversorgung für Druckluft verbunden ist und andererseits derer Druckerzeuger auch einen Rohlufteinlass aufweist. Ein derartiges, an sich geschlossenes System kann besonders variabel betrieben werden, wenn es mit Druckluft von außen versorgt werden muss, beispielsweise beim Neustart der Luftfederanlage oder dergleichen.

Auch ist es möglich, Luft aus der Versorgungseinheit zurück in die Hauptversorgung zu transportieren.

In weiterer Ausgestaltung der Erfindung umfasst die Versorgungseinheit wenigstens ein Verbindungsventil, welches zwischen dem ersten Druckluftspeicher und einer Hauptversorgung angeordnet ist. Hierdurch ergibt sich eine besonders einfach schaltbare und regelbare Verbindung der Versorgungseinheit zu der Hauptversorgung.

Alternativ hierzu kann die Versorgungseinheit auch über wenigstens ein Rückschlagventil, welches zwischen dem ersten Druckluftspeicher und einer Hauptversorgung angeordnet ist, mit der Hauptversorgung verbunden sein. Somit ergibt sich eine besonders einfache Versorgungseinheit, bei welcher das an sich geschlossene System beispielsweise dann mit Druckluft versorgt wird, wenn sich innerhalb dieses Systems zu wenig Druckluft befindet.

In weiterer Ausgestaltung der Erfindung ist dem ersten, vorderen Druckluftspeicher ein Drucksensor zugeordnet. Anhand des hierdurch erfassten Druckwertes kann dann beispielsweise der Druckerzeuger gestartet beziehungsweise gestoppt werden.

In weiterer Ausgestaltung der Erfindung umfasst die Versorgungseinheit eine Mehrzahl von Pilotventilen, über welche Luftfeder verschiedener Luftfedereinheiten steuerbar sind. Somit kann ein einziges Pilotventil die Steuerung mehrerer Luftfedern verschiedener Luftfedereinheiten, beispielsweise unterschiedlicher Fahrzeugseiten oder Fahrzeugachsen, dienen.

Die vorstehend im Zusammenhang mit der erfindungsgemäßen Luftfederanlage beschriebenen Vorteile gelten in ebensolcher Weise für die Versorgungseinheit gemäß Anspruch 9.

In diesem Zusammenhang hat sich eine Versorgungseinheit als besonders vorteilhaft gezeigt, welche durch ein Modul gebildet ist, welches zumindest jeweilige Leitungen zu den beiden Druckluftspeichern, zur jeweiligen Luftfeder und zur Hauptversorgung, jeweilige Pilotventile und/oder Verbindungsventile sowie den Druckerzeuger umfasst. Ein derartiges Modul ist besonders kompakt herstellbar und kann gegebenenfalls sogar unmittelbar - also ohne Zwischenschaltung von Leitungen - auf einer zugeordneten Luftfeder aufgesetzt sein. In diesem Fall ist eine Öffnung der entsprechenden Leitung, welche das Pilotventil mit der Luftfeder verbindet - vorzugsweise in Überdeckung mit einer Öffnung in einer Platte der Luftfeder angeordnet.

Weitere Vorteile und Einzelheiten der Erfindung ergeben sich aus der nachfolgenden Beschreibung bevorzugter Ausführungsbeispiele sowie anhand der Zeichnungen. Dabei zeigen:

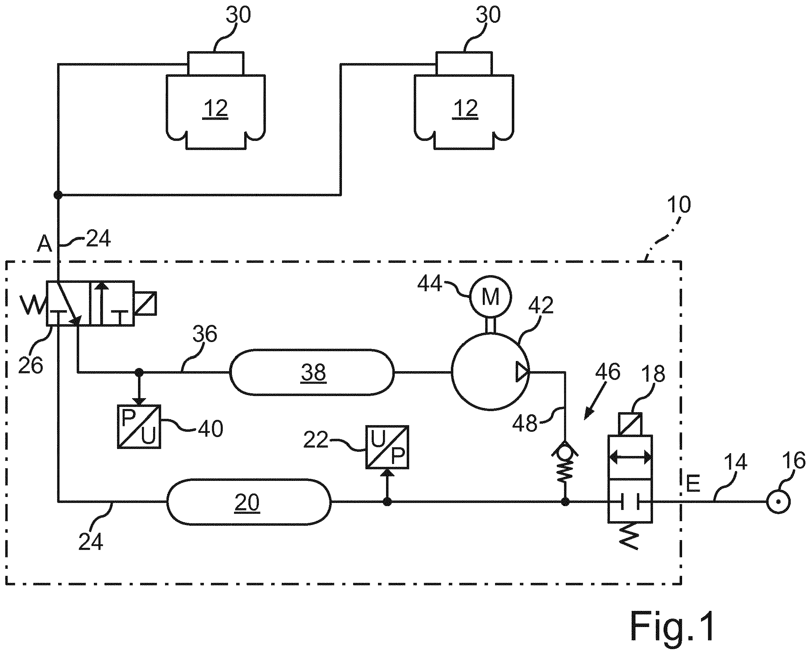

- Fig. 1: einen schematischen Schaltplan einer Luftfederanlage für ein Fahrzeug gemäß einer ersten, nicht zur Erfindung gehörenden Ausführungsform, mit einer Versorgungseinheit zur Versorgung wenigstens einer Luftfeder mit Druckluft, welche einen Druckluftspeicher umfasst, aus welchem die Luftfeder mit Druckluft versorgbar ist und in welchen Druckluft aus der Luftfeder über einen Druckerzeuger rückführbar ist, welche einen weiteren, vorderen Druckluftspeicher umfasst, welcher zwischen der Luftfeder und dem Druckerzeuger angeordnet ist, und welche ein Verbindungsventil umfasst, welches zwischen dem vorderen Druckluftspeicher und einer Hauptversorgung angeordnet ist;
- Fig.2: einen schematischen Schaltplan einer Luftfederanlage für ein Fahrzeug gemäß einer zweiten, nicht zur Erfindung gehörenden Ausführungsform, bei der die Versorgungseinheit mehrere Rückschlagventile umfasst, welche zwischen dem vorderen Druckluftspeicher und einer Hauptversorgung angeordnet sind;
- Fig.3: einen schematischen Schaltplan einer Luftfederanlage für ein Fahrzeug gemäß einer dritten, nicht zur Erfindung gehörenden Ausführungsform, bei der die Versorgungseinheit eine Mehrzahl von Pilotventilen umfasst, über welche Luftfedern einer rechten und linken Fahrzeugseite zugeordnete Luftfedereinheiten steuerbar sind;
- Fig.4: einen schematischen Schaltplan einer Luftfederanlage für ein Fahrzeug gemäß einer vierten, nicht zur Erfindung gehörenden Ausführungsform, bei der die Druckluftspeicher außerhalb der Versorgungseinheit angeordnet sind;
- Fig.5: einen schematischen Schaltplan auf ein ausschnittsweise dargestelltes Luftfedermodul einer nicht zur Erfindung gehörenden Luftfederanlage für ein Fahrzeug;
- Fig.6: einen schematischen Schaltplan einer beispielsweise bei einem Gelenkbus einsetzbaren Luftfederanlage für ein Fahrzeug gemäß einer fünften, nicht zur Erfindung gehörenden Ausführungsform mit einer schematisch angedeuteten Versorgungseinheit;
- Fig.7: einen schematischen Schaltplan einer Luftfederanlage für ein Fahrzeug gemäß einer sechsten, nicht zur Erfindung gehörenden Ausführungsform, bei der der Druckerzeuger der Versorgungseinheit einen Rohlufteinlass aufweist, und
- Fig.8: einen schematischen Schaltplan einer Luftfederanlage für ein Fahrzeug gemäß einer siebten Ausführungsform, bei der Druckerzeuger als kleiner Verdichter ausgebildet und der stromab hinter dem Verdichter angeordnete Druckluftspeicher über einen Versorgungsanschluss von außen oder einen internen weiteren Druckluftspeicher mit Druckluft versorgbar ist.

In Fig. 1 ist ein schematischer Schaltplan einer Luftfederanlage für ein Fahrzeug in Form eines Nutzkraftwagens, beispielsweise eines Lastkraftwagens oder einen Busses, gemäß einer nicht zur Erfindung gehörenden ersten Ausführungsform gezeigt. Von der Luftfederanlage ist dabei eine mit einem Strichpunktline angedeutete Versorgungseinheit 10 erkennbar, die zur Versorgung von vorliegend zwei Luftfedern 12 mit Druckluft vorgesehen ist.

Die Versorgungseinheit 10 ist im vorliegenden Ausführungsbeispiel über eine Leitung 14 an einem Anschluss E der Versorgungseinheit 10 mit einer Hauptversorgung 16 für Druckluft, beispielsweise einer zentralen Druckluftanlage des Kraftwagens für die Bremsanlage und/oder dergleichen Baugruppen, verbunden, innerhalb welcher ein hier elektrisch schaltbares 2/2-Wegeventil 18 angeordnet ist, welche in seiner gezeigten stromlosen Ausgangsstellung einen freien Durchfluss der Druckluft unterbindet. Nach dem Öffnen dieses Verbindungsventils 18 zur Hauptversorgung 16 ist ein hinterer, zweiter Druckluftspeicher 20 mit Druckluft befüllbar, deren Druck innerhalb der Leitung 14 beziehungsweise des Ventils 18 mittels eines Drucksensors 22 ermittelbar ist. Ein derartiges Füllen des Druckluftspeichers 20 erfolgt beispielsweise bei einer Aufnahme des Fahrbetriebs des Kraftwagens ober bei einem Mangel an Druckluft innerhalb des im Weiteren noch näher erläuterten geschlossenen Systems der Versorgungseinheit 10.

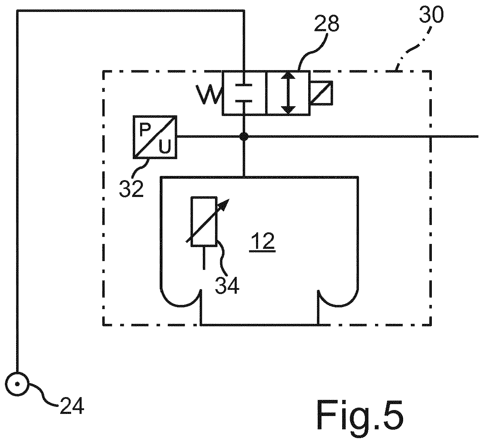

Die Druckluft aus dem zweiten, hinteren Druckluftspeicher 20 gelangt über eine Leitung 24, innerhalb welcher ein als 3/2-Wegeventil ausgebildetes Pilotventil 26 angeordnet ist, zu einem Anschluss A der Versorgungseinheit 10, und von dort weiter zu den jeweiligen Luftfedern 12. In dem hier dargestellten, stromlosen Schaltzustand ist die Leitung 24 unterbrochen, so dass keine Luft in Richtung der Luftfedern 12 strömen kann. Im vorliegend gezeigten Ausführungsbeispiel weist jede der Luftfedern 12 selbst noch wenigstens ein separates Halteventil 28 auf, wie dies in Fig. 5 gezeigt ist. Das Halteventil 28 ist dabei als 2/2-Wegeventil ausgebildet und Teil eines mit einer Strichpunktlinie funktional angedeuteten Luftfedermoduls 30, dem außerdem ein Drucksensor 32 zum Messen eines Druck innerhalb der Luftfeder 10 und/oder ein Höhensensor 34 zum Bestimmen einer Höhe der Luftfeder 10 zugeordnet ist.

Im stromlosen und ungeschalteten Zustand des Pilotventils 26 gelangt aus der jeweiligen Luftfeder 12 abgelassene Luft - nach Öffnen des jeweiligen Halteventils 28 - über eine Leitung 36 zu einem vorderen, ersten Druckluftspeicher 38. Der Druck der in den Druckluftspeicher 38 aufgenommen Luft wird dabei im Bereich der Leitung 36 durch einen Drucksensor 40 erfasst.

In den Druckluftspeicher 38 ist dabei so lange Luft aus er jeweiligen Luftfeder 12 ablassbar, bis maximal ein Druckausgleich zwischen der Luft innerhalb der jeweiligen Luftfeder 12 und dem Druckluftspeicher 38 herrscht. Im normalen Fahrbetrieb ist dies jedoch ausreihend, um Luft aus den Luftfedern äußerst schnell in den als Zwischenspeicher wirkenden vorderen Druckluftspeicher 38 abzulassen. Der Druckluftspeicher 38 ist dabei vorzugsweise auf die Anzahl der mit diesem verbundenen Luftfedern 12 beziehungsweise auf deren jeweiliges Volumen abgestimmt. Im Ergebnis soll jedenfalls eine schnelle Entlassung von Druckluft aus den Luftfedern 12 in den vorderen Druckluftspeicher geschaffen werden.

An den vorderen Druckluftspeicher 38 schließt sich ein beispielsweise mittels eines Elektromotors 44 angetriebener Druckerzeuger 42 an, der insbesondere als Kompressor oder dergleichen Verdichter ausgebildet ist. Mittels des Druckerzeugers 42 kann somit im Druckluftspeicher 38 gesammelte Luft verdichtet und über eine Leitung 48 zum hinteren, zweiten Druckluftspeicher 20 gefördert werden, so das dann die jeweiligen Luftfedern 12 mit Druckluft entsprechend hohen Drucks beaufschlagt und angehoben werden können.

Es ist erkennbar, dass durch den vorderen Druckluftspeicher 20 somit ein Zwischenpuffer geschaffen ist, der einen Flaschenhals im Bereich des Kompressors 42 vermeidet. Vielmehr kann Luft aus den Luftfedern 12 sehr schnell abgelassen werden in den Druckluftspeicher 20 und von dort aus mittels des Kompressors 42 verdichtet und zum hinteren Druckluftspeicher 38 gefördert werden, um dann wieder zum Anheben der Luftfedern 12 bereit zu stehen. Demzufolge kann der Kompressor 42 auch verhältnismäßig klein beziehungsweise Energie sparend ausgebildet sein und kann überdies nur zeitweise betrieben werden. Er muss also nicht ständig betrieben werden, sobald Luft aus den Luftfedern 12 ausgelassen wird, sondern kann beispielsweise erst nach Erreichen eines mittels des Drucksensors 40 ermittelten Grenzdrucks eingeschaltet werden. Somit können auch die Betriebszeiten des Kompressors 42 weiter reduziert werden, um Energie zu sparen.

Ein Rückschlagventil 46 sorgt dafür, dass komprimierte Luft nicht aus dem hinteren Druckluftspeicher 20 zurück in den Kompressor 42 beziehungsweise den vorderen Druckluftspeicher 38 strömen kann.

Insgesamt ist somit mit der Versorgungseinheit 10 gemäß Fig. 1 ein geschlossenes System geschaffen, welches beispielsweise lediglich bei Aufnahme des Fahrbetriebs mit externer Luft versorgt werden muss. Durch Schalten des Ventils 18 ist es dabei auch denkbar, Luft zurück in die Hauptversorgung 16 zu entlassen. Dies kann beispielsweise vor dem Abstellen des Fahrzeugs erfolgen.

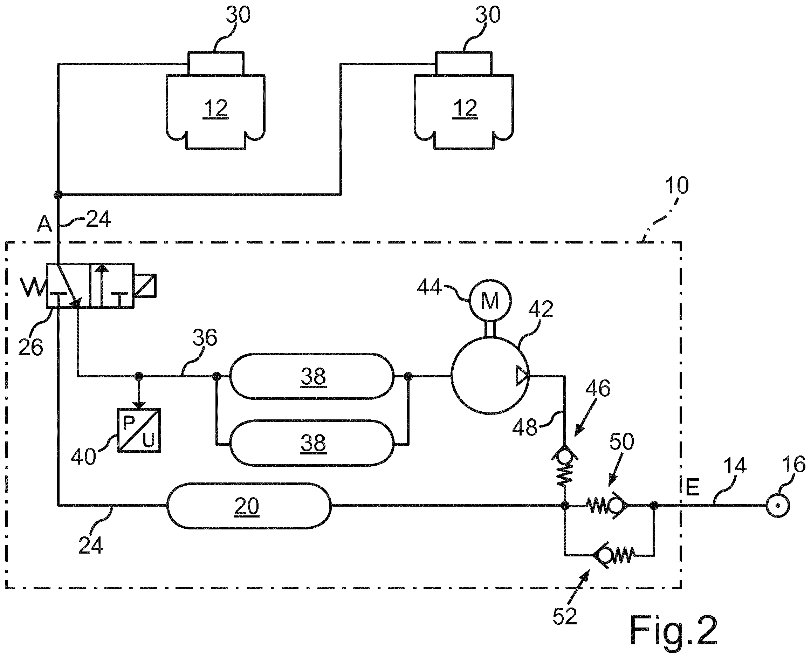

In Fig. 2 ist eine Luftfederanlage gemäß einer nicht zur Erfindung gehörenden zweiten Ausführungsform dargestellt, welche jedoch im Wesentlichen identisch funktioniert wie diejenige gemäß Fig. 1, so dass im Weiteren nur auf Unterschiede eingegangen werden soll. Zunächst weist die Ventileinheit 10 anstelle des Verbindungsventils 18 zwei Rückschlagventile 50, 52 auf, welche entsprechend so eingestellt sind, dass bei einem zu geringen Druck in dem geschlossenen System der Ventileinheit 10 Luft aus der Hauptversorgung 16 nachströmen kann, und andererseits, dass Luft aus dem geschlossenen System in Richtung der Hauptversorgung 16 abströmen kann, wenn das geschlossene System entleert werden soll. Gegebenenfalls können hierzu elektrische, variabel einstellbare Rückschlagventile 50, 52 eingesetzt werden, welche automatisch so eingestellt werden können, dass sie bei einem entsprechend eingestellten Druck schalten.

Im Weiteren unterscheidet sich die Luftfederanlage gemäß Fig. 2 von derjenigen gemäß Fig. 1 dadurch, dass anstelle eines vorderen Druckluftspeichers 38 zwei derartige Druckluftspeicher 38 vorgesehen sind. Hierdurch lässt sich beispielsweise ein größeres Volumen an Druckluft aus der jeweiligen Luftfeder 12 ablassen, bevor sich zwischen dieser und den Druckluftspeichern 50, 52 ein Druckausgleich einstellt. Somit können die jeweiligen Luftfedern noch schneller entleert werden, ohne dass hierfür ein Einschalten des Kompressors 42 erforderlich ist.

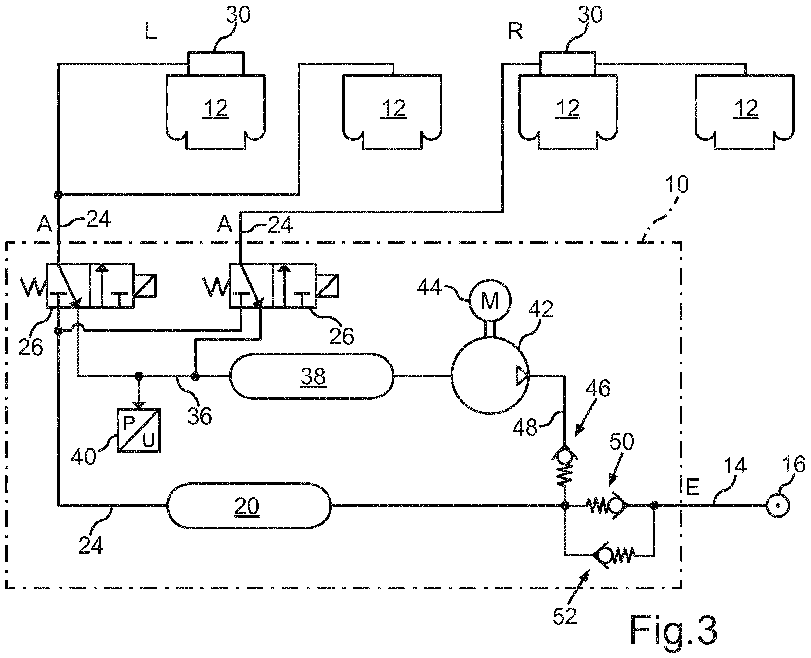

Fig. 3 zeigt eine dritte, nicht zur Erfindung gehörende Ausführungsform der Luftfederanlage beziehungsweise der Versorgungseinheit 10, bei der die Versorgungseinheit 10 wiederum über eine Anordnung von Rückhalteventilen 50, 52 mit der Hauptversorgung 16 verbunden ist. Es ist jedoch klar, dass anstelle der Rückhalteventile 50, 52 auch ein Verbindungsventil 18 wie bei der Ausführungsform gemäß Fig. 1 vorgesehen sein kann.

Im Weiteren unterscheidet sich die vorliegende Ausführungsform von den zuvor beschriebenen durch das Vorsehen von zwei Pilotventilen 26, welche parallel über jeweilige Leitungen 24 mit Druckluft aus dem hinteren Druckluftspeicher 20 versorgbar sind. Über jedes dieser Pilotventile 26 sind vorliegend jeweils zwei Luftfedern 12 einer jeweiligen Luftfedereinheit L und R. Die beiden Luftfedern 12 der Luftfedereinheit L sind dabei diejenigen auf der linken Fahrzeugseite, die Luftfedern 12 der Luftfedereinheit R sind dabei diejenigen auf der rechten Fahrzeugseite des Kraftwagens, beispielsweise eines Busses. Durch Betätigen des jeweiligen Pilotventils 26 lässt sich somit der Bus auf der jeweiligen Fahrzeugseite absenken oder anheben, wie dies an Haltestellen zum barrierefreien Ein- und Ausstieg erforderlich ist. Natürlich lassen sich auch andere Luftfedereinheiten über entsprechende Pilotventile 26 zusammenfassen. So ist es beispielsweise denkbar, jeweilige Luftfedern 12 einer oder mehrerer Fahrzeugachsen und/oder Liftachsen über jeweilige Pilotventile 26 anzusteuern.

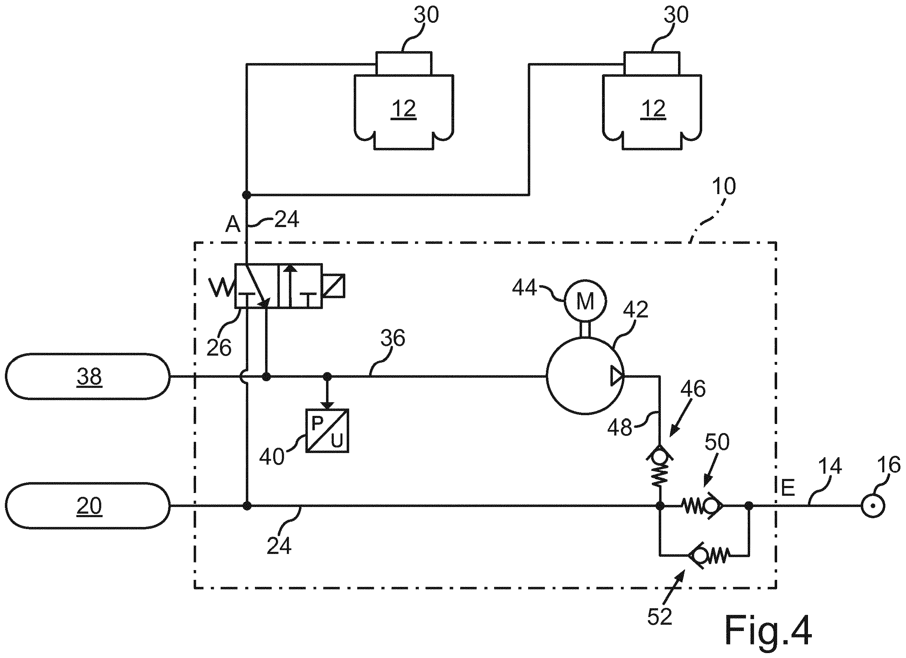

Die in Fig. 4 gezeigte, nicht zur Erfindung gehörende Ausführungsform setzt im Wesentlichen auf derjenigen gemäß Fig. 2 auf, wobei vorliegend die Druckluftspeicher 20, 38 außerhalb der Versorgungseinheit 10 angeordnet sind. Ebenso kann auch der Kompressor 42 oder ein sonstiges Bauteil außerhalb der Versorgungseinheit 10 angeordnet sein. Dies hat beispielsweise den Vorteil, dass die Versorgungseinheit 10 als Modul ausgebildet sein kann, welche beispielsweise als vormontierter Block ausgebildet sein kann. Gerade wenn dabei besonders raumgreifende Bauteile ausgelagert sind kann ein derartiges Modul auch unmittelbar an einer Luftfeder 12 befestigt werden.

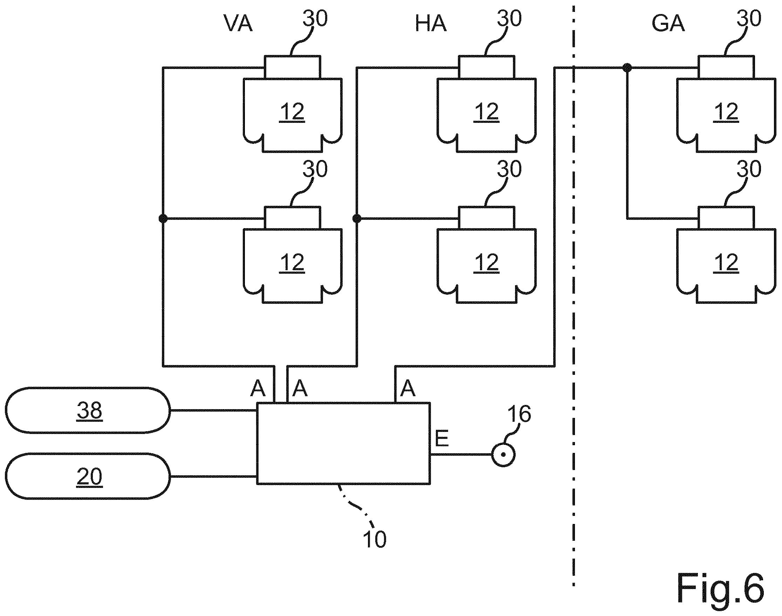

Fig. 6 zeigt des Weiteren eine nicht zur Erfindung gehörende Luftfederanlage, wie diese insbesondere bei einem Gelenkbus zum Einsatz kommen kann. Dabei wird eine Versorgungseinheit 10 vorgesehen, deren Druckluftspeicher 20, 38 beispielsweise außerhalb der Versorgungseinheit 10 angeordnet sind. Gleichfalls kann natürlich auch eine andere der beschriebenen Versorgungseinheiten 10 zum Einsatz kommen.

Der Gelenkbus weist dabei eine Vorderachse VA und eine Hinterachse HA sowie - hinter dem Gelenk - eine Gelenkachse GA auf, welche vorliegend über jeweilige Pilotventile 26 als jeweilige Luftfedereinheiten angesteuert werden. Dabei ist gegebenenfalls auch eine Trennung der Luftfedern in eine jeweilige rechte und linke Luftfedereinheit denkbar, wie dies im Zusammenhang mit Fig. 3 bereits beschrieben worden ist.

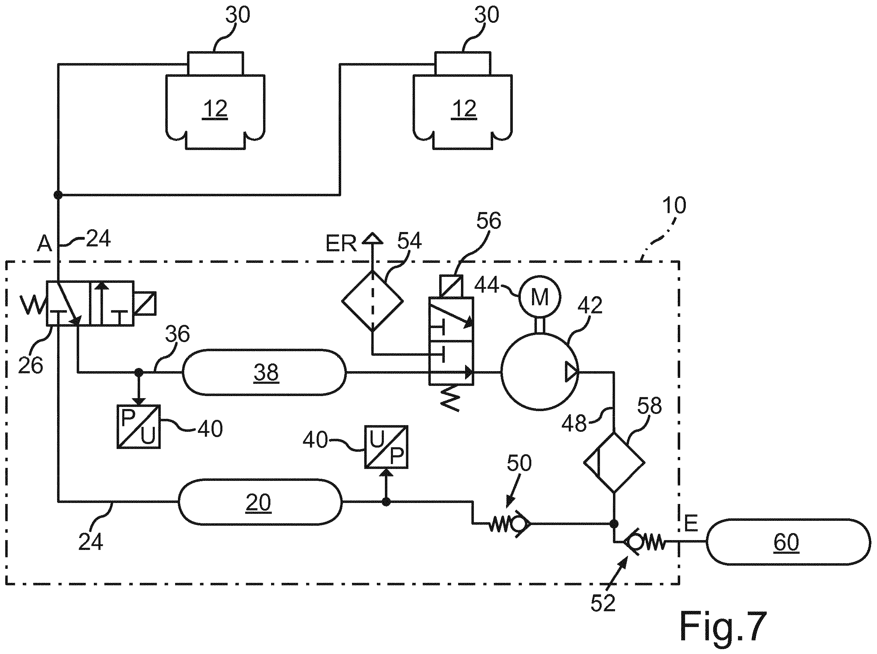

Schließlich zeigt Fig. 7 eine nicht zur Erfindung gehörende Ausführungsform der Luftfederanlage, bei der die Versorgungseinheit 10 autark, also beispielsweise ohne Druckluftversorgung der Hauptversorgung 16 betrieben werden kann. Hierzu weist der Kompressor oder dergleichen Druckerzeuger 42 einen separaten Eingang ER für Rohluft auf. Diese Luft gelangt beispielsweise über einen Filter 54 und ein Umschaltventil 56 zum Kompressor 42. Mittels des Umschaltventils 56 kann hierbei eingangsseitig zwischen der Rohluft EK und der aus des vorderen Druckluftspeicher 38 umgeschaltet werden. Somit kann das an sich geschlossene System innerhalb der Versorgungseinheit 10 mittels des eigenen Kompressors 42 befüllt beziehungsweise nachgefüllt werden. Natürlich kann die gezeigte Anordnung auch vorgesehen werden bei einer Luftfederanlage mit Hauptversorgung 16. In diesem Fall kann die Hauptversorgung 16 gegebenenfalls auch durch die Versorgungseinheit 10 beziehungsweise dem Kompressor 42 mit Druckluft versorgt werden.

Aus Fig. 7 ist zudem erkennbar, dass zwischen dem Kompressor 42 und dem hinteren Druckluftspeicher 20 ein Filter 58 vorgesehen ist sowie jeweilige Rückschlagventile 50, 52, die funktional denjenigen gemäß den Fig. 2 bis 4 entsprechen. Anstelle der Hauptversorgung 16 ist vorliegend ein weiterer Druckluftspeicher 60 gezeigt, in welchem Luft außerhalb der Versorgungseinheit 10 gespeichert werden kann. Der Druckluftspeicher 60 kann dabei auch der Hauptversorgung 16 zugeordnet sein.

Als im Rahmen der Erfindung mitumfasst ist es zu betrachten, dass auch Luftfederanlagen und zugehörige Versorgungseinheiten 10 als mitumfasst gelten, die sich aus Kombinationen der beschrieben Einzelkomponenten ergeben. So ist insbesondere die jeweilige Anordnung von Rückschlagventilen am Anschluss E der Versorgungseinheit 10 ohne weiteres durch ein jeweiliges Verbindungsventil 18 zu ersetzen und umgekehrt. Ebenso sind die jeweiligen Pilotventile 26 für jeweilige Luftfedereinheiten in beliebiger Weise zu kombinieren. Darüber hinaus kann jede Luftfeder 12 ein separates, zugeordnetes Luftfedermodul 30 aufweisen, oder aber, es werden mehrere Luftfedern mittels eines Luftfedermoduls 30 gesteuert.

Zudem kann der Kompressor 42 oder dergleichen Druckerzeuger bei allen Ausführungsformen auch zur Schöpfung von Rohluft - wie im Zusammenhang mit Fig. 7 beschrieben - ausgebildet sein.

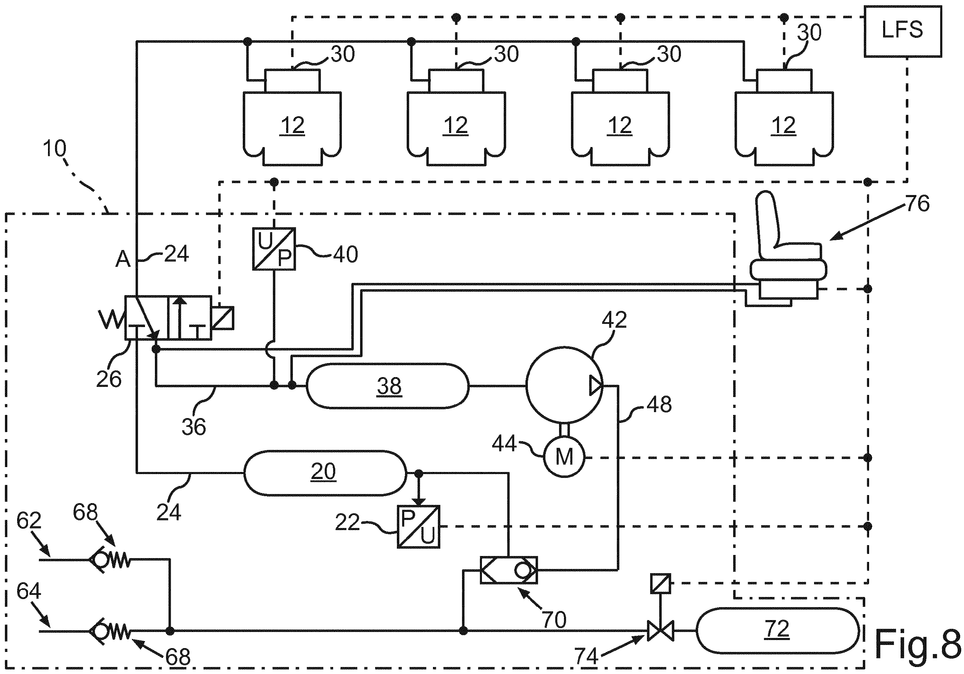

Fig. 8 zeigt eine einen erfindungsgemäßen schematischen Schaltplan einer Luftfederanlage für ein Fahrzeug gemäß einer siebten Ausführungsform, welche auf der Ausführungsform gemäß Fig. 1 aufbaut, aber generell auch bei allen anderen, hier erläuterten weiteren Ausführungsformen denkbar ist. Zur Vermeidung von Wiederholungen wird deshalb im Weiteren lediglich auf die Unterschiede beziehungsweise Ergänzungen der siebten Ausführungsform gegenüber der ersten Ausführungsform eingegangen.

Generell ist die Luftfederanlage gemäß der siebten Ausführungsform insbesondere, jedoch nicht ausschließlich, für Fahrzeuge mit Elektroantrieb gedacht. Da derartige Fahrzeuge beispielsweise aufgrund des elektrischen Bremsens mittels der jeweiligen Antriebseinheit einen geringeren Druckluftbedarf haben, wird Druckluft bei derartigen Fahrzeugen, beispielsweise Bussen oder Lastkraftwagen, insbesondere für die Luftfederung, die Fahrerhauslagerung und/der sonstige Komponenten wie Fahrzeugsitzlagerungen benötigt.

Aus diesem Grund kann als Druckerzeuger 42 im vorliegenden Fall beispielsweise auf einen Kompressor, welcher die Hauptversorgung 16 bildet, verzichtet werden. Ein Anschluss an die Hauptversorgung 16 ist daher vorliegend zwar theoretisch denkbar, aber hier nicht vorgesehen. Zudem kann gegebenenfalls anstelle eines Kompressors lediglich ein kleiner Verdichter als Druckerzeuger 42 vorgesehen werden.

Vielmehr wird im vorliegenden Fall die grundsätzlich als geschlossenes System ausgebildete Versorgungseinheit 10 der Luftfederanlage um einen jeweiligen Versorgungsanschluss 62, 64 ergänzt, welche über ein jeweiliges Absperrventil 66, 68, im vorliegenden Fall ein jeweiliges Rückschlagventil - sowie ein Oder-Ventil 70 mit dem stromab hinter dem Druckerzeuger 42 angeordneten Druckluftspeicher 20 verbunden beziehungsweise verbindbar sind. Über den Versorgungsanschluss 62 ist der Druckluftspeicher 20 beispielsweise mit einem Werkstattanschluss verbindbar und im Rahmen einer Inspektion befüllbar. Über den Versorgungsanschluss 64 ist der Druckluftspeicher 20 beispielsweise mit einer Reifenbefüllstation oder einem mobilen Reifenbefüllgerät verbindbar und somit beispielsweise an einer Tankstelle befüllbar. Das hierbei vorgesehene Oder-Ventil 70 ermöglicht einerseits die Befüllung des Druckluftspeichers 20 mittels des Verdichters 42 und andererseits die Befüllung des Druckluftspeichers 20 über einen der beiden Versorgungsanschlüsse 62, 64. Natürlich ist über diese auch eine andere Art der Befüllung denkbar. Somit ist über die Versorgungsanschlüsse 62, 64 der Druckluftspeicher 20 mit Druckluft von außerhalb der Versorgungseinheit 10 befüllbar.

Zur alternativen Befüllung des Druckluftspeichers 20 mit Druckluft kann auch ein interner weiterer Druckluftspeicher 72 vorgesehen sein, welcher beispielsweise ein Volumen von lediglich 10 l aufweist und mit Druckluft mit einem Druck von (maximal) 100 bar befüllt ist. Ein derartiger Druckluftspeicher 72 nimmt extrem wenig Platz ein und ist demzufolge bestens für eine Notbefüllung geeignet. Der Druckluftspeicher 72 ist vorliegend über ein schaltbares Ventil 74 und das Oder-Ventil 70 mit dem Druckluftspeicher 20 verbunden beziehungsweise verbindbar.

Im vorliegenden Fall sind somit 3 Möglichkeiten geschaffen, die Versorgungseinheit 10, welche ansonsten ein geschlossenes System darstellt, im Bedarfsfall mit Druckluft zu befüllen. Zudem kann gegebenenfalls das System über den Druckerzeuger 42 mit einer kleineren Menge Luft, welche von außen ansaugbar ist, befüllt werden.

Im Ergebnis jedenfalls ist somit vorliegend ein geschlossenes System schaffbar, welches im Bedarfsfall auf die angegebene Weise mit Druckluft von außen zu befüllen ist, und welches im Normalbetrieb mit dem gegebenenfalls sehr kleinen Verdichter 42 die zu erfüllenden Aufgaben bewerkstelligen kann, da der zusätzliche Druckluftspeicher 38 stromauf vor dem Druckerzeuger/Verdichter 42 vorgesehen ist. Der Verdichter 42 kann demzufolge aufgrund seiner Kompaktheit mit einem energieeffizienten Motor 44 betrieben werden. Dabei braucht ein derartiger, kompakter Verdichter 42 beispielsweise nur ein Drittel der Energie eines Kompressors beziehungsweise er hat nur ein Vierteil der Laufzeit eines bislang üblichen Kompressors.

Weiter ist das in Fig. 8 gezeigte System um eine Luftfedersteuerung LFS ergänzt, welche entsprechende Druckwerte an den Sensoren 22, 40 ermittelt beziehungsweise die Ventile 26, 74 und entsprechende Ventile an den Luftfedern 12 sowie den Motor 44 steuert.

In das System in Fig. 8 ist zudem eine Fahrersitzlagerung 76 integriert, welche über entsprechende Leitungen mit der Versorgungseinheit 10 verbunden ist.

### Bezugszeichenliste

- 10: Versorgungseinheit
- 12: Luftfeder
- 14: Leitung
- 16: Hauptversorgung
- 18: Ventils
- 20: Druckluftspeicher
- 22: Drucksensors
- 24: Leitung
- 26: Pilotventil
- 28: Halteventil
- 30: Luftfedermoduls
- 32: Drucksensor
- 34: Höhensensor
- 36: Leitung
- 38: Druckluftspeicher
- 40: Drucksensor
- 42: Druckerzeuger/Kompressor
- 44: Elektromotors
- 46: Rückschlagventil
- 48: Leitung
- 50: Rückschlagventil
- 52: Rückschlagventil
- 54: Filter
- 56: Umschaltventil
- 58: Trockner
- 60: Druckluftspeicher
- 62: Versorgungsanschlus
- 64: Versorgungsanschluss
- 66: Absperrventil
- 68: Absperrventil
- 70: Oder-Ventil
- 72: Druckluftspeicher
- 74: Ventil

- E: Anschluss
- A: Anschluss
- ER: Anschluss Rohluft
- VA: Vorderachse
- HA: Hinterachse
- GA: Gelenkachse

## Patentansprüche

1. Luftfederanlage für einen Kraftwagen, mit wenigstens einer Luftfeder (12), die über eine zugeordnete Versorgungseinheit (10) mit Druckluft versorgbar ist, welche einen Druckluftspeicher (20) umfasst, aus welchem die Luftfeder (12) mit Druckluft versorgbar ist und in welchen Druckluft aus der Luftfeder (12) über einen Druckerzeuger (42) rückführbar ist, wobei die Versorgungseinheit (10) wenigstens einen weiteren, vorderen Druckluftspeicher (38) umfasst, welcher zwischen der Luftfeder (12) und dem Druckerzeuger (42) angeordnet ist,
**dadurch gekennzeichnet, dass**
die Versorgungseinheit (10) wenigstens einen weiteren Druckluftspeicher (72) umfasst, über welchen der Druckluftspeicher (20) mit Druckluft befüllbar ist.

2. Luftfederanlage nach Anspruch 1,
**dadurch gekennzeichnet, dass**
die Versorgungseinheit (10) wenigstens ein Pilotventil (26) umfasst, welches zwischen der Luftfeder (12) und dem Druckerzeuger (42) angeordnet ist.

3. Luftfederanlage nach einem der vorhergehenden Ansprüche,
**dadurch gekennzeichnet, dass**
die Versorgungseinheit (10) mit Druckluft versorgbar ist, welche mit einer Hauptversorgung (16) für Druckluft verbunden ist.

4. Luftfederanlage nach einem der vorhergehenden Ansprüche,
**dadurch gekennzeichnet, dass**
der Druckerzeuger (42) einen Rohlufteinlass (ER) aufweist.

5. Luftfederanlage nach einem der Ansprüche 1 bis 3,
**dadurch gekennzeichnet, dass**
die Versorgungseinheit (10) wenigstens ein Verbindungsventil (18) umfasst, welches zwischen dem vorderen Druckluftspeicher und einer Hauptversorgung angeordnet ist.

6. Luftfederanlage nach einem der Ansprüche 1 bis 3,
**dadurch gekennzeichnet, dass**
die Versorgungseinheit (10) wenigstens ein Rückschlagventil (50, 52) umfasst, welches zwischen dem hinteren Druckluftspeicher (20) und einer Hauptversorgung (16) angeordnet ist.

7. Luftfederanlage nach einem der vorhergehenden Ansprüche,
**dadurch gekennzeichnet, dass**
dem vorderen Druckluftspeicher (38) ein Drucksensor (40) zugeordnet ist.

8. Luftfederanlage nach einem der vorhergehenden Ansprüche,
**dadurch gekennzeichnet, dass**
die Versorgungseinheit (10) eine Mehrzahl von Pilotventilen (26) umfasst, über welche Luftfedern (12) verschiedener Luftfedereinheiten steuerbar sind.

9. Versorgungseinheit (10) für eine Luftfederanlage nach einem der Ansprüche 1 bis 8, wobei mittels der Versorgungseinheit wenigstens eine Luftfeder (12) der Luftfederanlage mit Druckluft versorgbar ist und welche einen Druckluftspeicher (42) umfasst, aus welchem die Luftfeder (12) mit Druckluft versorgbar ist und in welchen Druckluft aus der Luftfeder (12) über einen Druckerzeuger (42) rückführbar ist, wobei die Versorgungseinheit (10) wenigstens einen weiteren, vorderen Druckluftspeicher (38) umfasst, welcher zwischen der Luftfeder (12) und dem Druckerzeuger (42) angeordnet ist, **dadurch gekennzeichnet, dass**
die Versorgungseinheit (10) wenigstens einen weiteren Druckluftspeicher (72) umfasst, über welchen der Druckluftspeicher (20) mit Druckluft befüllbar ist.

10. Versorgungseinheit (10) nach einem der vorhergehenden Ansprüche,
**dadurch gekennzeichnet, dass**
die Versorgungseinheit (10) durch ein Modul gebildet ist, welches zumindest jeweilige Leitungen (24, 36) zu den Druckluftspeichern (14, 20, 24, 38), zur jeweiligen Luftfeder (12), zu dem Druckerzeuger (42) und zur Hauptversorgung (16) hin, jeweilige Pilotventile (26) und/oder Verbindungsventile (18) umfasst.

11. Versorgungseinheit (10) nach einem der vorhergehenden Ansprüche,
**dadurch gekennzeichnet, dass**
die Versorgungseinheit (10) wenigstens einen Versorgungsanschluss (62, 64) umfasst, über welchen der Druckluftspeicher (20) mit Druckluft von außerhalb der Versorgungseinheit (10) befüllbar ist.

## Claims

1. An air spring system for an automobile, with at least one air spring (12), which can be supplied with compressed air via an associated supply unit (10), which includes a compressed air reservoir (20), from which the air spring (12) can be supplied with compressed air and into which compressed air can be returned from the air spring (12) via a pressure generator (42),
wherein the supply unit (10) includes at least one further, front compressed air reservoir (38), which is arranged between the air spring (12) and the pressure generator (42),
**characterized in that**
the supply unit (10) includes at least one further compressed air reservoir (72), via which the compressed air reservoir (20) can be filled with compressed air.

2. The air spring system according to claim 1,
**characterized in that**
the supply unit (10) includes at least one pilot valve (26), which is arranged between the air spring (12) and the pressure generator (42).

3. The air spring system according to any one of the preceding claims,
**characterized in that**
the supply unit (10) can be supplied with compressed air, which is connected to a main supply (16) for compressed air.

4. The air spring system according to any one of the preceding claims,
**characterized in that**
the pressure generator (42) comprises a raw air inlet (ER).

5. The air spring system according to any one of claims 1 to 3,
**characterized in that**
the supply unit (10) includes at least one connecting valve (18), which is arranged between the front compressed air reservoir and a main supply.

6. The air spring system according to any one of claims 1 to 3,
**characterized in that**
the supply unit (10) includes at least one check valve (50, 52), which is arranged between the rear compressed air reservoir (20) and a main supply (16).

7. The air spring system according to any one of the preceding claims,
**characterized in that**
a pressure sensor (40) is associated with the front compressed air reservoir (38).

8. The air spring system according to any one of the preceding claims,
**characterized in that**
the supply unit (10) includes a plurality of pilot valves (26), via which air springs (12) of different air spring units are controllable.

9. A supply unit (10) for an air spring system according to any one of claims 1 to 8, wherein at least one air spring (12) of the air spring system can be supplied with compressed air by means of the supply unit, and which includes a compressed air reservoir (42), from which the air spring (12) can be supplied with compressed air and into which compressed air can be returned from the air spring (12) via a pressure generator (42), wherein the supply unit (10) includes at least one further, front compressed air reservoir (38), which is arranged between the air spring (12) and the pressure generator (42),
**characterized in that**
the supply unit (10) includes at least one further compressed air reservoir (72), via which the compressed air reservoir (20) can be filled with compressed air.

10. The supply unit (10) according to any one of the preceding claims,
**characterized in that**
the supply unit (10) is formed by a module, which includes at least respective lines (24, 36) towards the compressed air reservoirs (14, 20, 24, 38), towards the respective air spring (12), towards the pressure generator (42) and towards the main supply (16), respective pilot valves (26) and/or connecting valves (18).

11. The supply unit (10) according to any one of the preceding claims,
**characterized in that**
the supply unit (10) includes at least one supply port (62, 64), via which the compressed air reservoir (20) can be filled with compressed air from outside of the supply unit (10).

## Revendications

1. Dispositif d'amortissement pneumatique pour un véhicule automobile, comportant au moins un ressort pneumatique (12), qui peut être alimenté avec de l'air comprimé par l'intermédiaire d'une unité d'alimentation associée (10), comportant un accumulateur d'air comprimé (20), à partir duquel le ressort pneumatique (12) peut être alimenté avec de l'air comprimé, et dans lequel de l'air comprimé peut être retourné du ressort pneumatique (12) par l'intermédiaire d'un générateur de pression (42),
dans lequel l'unité d'alimentation (10) comporte au moins un autre accumulateur d'air comprimé avant (38), qui est agencé entre le ressort pneumatique (12) et le générateur de pression (42),
**caractérisé en ce que**
l'unité d'alimentation (10) comporte au moins un autre accumulateur d'air comprimé (72), par l'intermédiaire duquel l'accumulateur d'air comprimé (20) peut être rempli de l'air comprimé.

2. Dispositif d'amortissement pneumatique selon la revendication 1,
**caractérisé en ce que**
l'unité d'alimentation (10) comporte au moins une soupape pilote (26), qui est agencée entre le ressort pneumatique (12) et le générateur de pression (42).

3. Dispositif d'amortissement pneumatique selon l'une quelconque des revendications précédentes,
**caractérisé en ce que**
l'unité d'alimentation (10) peut être alimentée avec de l'air comprimé, qui est raccordée à une alimentation principale (16) pour de l'air comprimé.

4. Dispositif d'amortissement pneumatique selon l'une quelconque des revendications précédentes,
**caractérisé en ce que**
le générateur de pression (42) comporte une entrée d'air brut (ER).

5. Dispositif d'amortissement pneumatique selon l'une quelconque des revendications 1 à 3,
**caractérisé en ce que**
l'unité d'alimentation (10) comporte au moins une soupape de raccordement (18), qui est agencée entre l'accumulateur d'air comprimé avant et une alimentation principale.

6. Dispositif d'amortissement pneumatique selon l'une quelconque des revendications 1 à 3,
**caractérisé en ce que**
l'unité d'alimentation (10) comporte au moins une soupape de retenue (50, 52), qui est agencée entre l'accumulateur d'air comprimé arrière (20) et une alimentation principale (16).

7. Dispositif d'amortissement pneumatique selon l'une quelconque des revendications précédentes,
**caractérisé en ce que**
un capteur de pression (40) est attribué à l'accumulateur d'air comprimé avant (38).

8. Dispositif d'amortissement pneumatique selon l'une quelconque des revendications précédentes,
**caractérisé en ce que**
l'unité d'alimentation (10) comporte une pluralité de soupapes pilotes (26), par l'intermédiaire desquelles des ressorts pneumatiques (12) des différentes unités de ressorts pneumatiques peuvent être commandés.

9. Unité d'alimentation (10) pour un dispositif d'amortissement pneumatique selon l'une quelconque des revendications 1 à 8,
dans laquelle, par l'intermédiaire de l'unité d'alimentation, au moins un ressort pneumatique (12) du dispositif d'amortissement pneumatique peut être alimenté avec de l'air comprimé, et qui comporte un accumulateur d'air comprimé (42) à partir duquel le ressort pneumatique (12) peut être alimenté avec de l'air comprimé, et dans lequel de l'air comprimé peut être retourné du ressort pneumatique (12) par l'intermédiaire d'un générateur de pression (42),
dans lequel l'unité d'alimentation (10) comporte au moins un autre accumulateur d'air comprimé avant (38), qui est agencé entre le ressort pneumatique (12) et le générateur de pression (42),
**caractérisé en ce que**
l'unité d'alimentation (10) comporte au moins un autre accumulateur d'air comprimé (72), par l'intermédiaire duquel l'accumulateur d'air comprimé (20) peut être rempli de l'air comprimé.

10. Unité d'alimentation (10) selon l'une quelconque des revendications précédentes,
**caractérisé en ce que**
l'unité d'alimentation (10) est formé par un module, qui comporte au moins des conduites respectives (24, 36) vers les accumulateurs d'air comprimé (14, 20, 24, 38), vers le ressort pneumatique respective (12), vers le générateur de pression (42) et vers l'alimentation principale (16), des soupapes pilotes respectives (26) et/ou des soupapes de raccordement respectives (18).

11. Unité d'alimentation (10) selon l'une quelconque des revendications précédentes,
**caractérisé en ce que**
l'unité d'alimentation (10) comporte au moins un raccord d'alimentation (62, 64), par l'intermédiaire duquel l'accumulateur d'air comprimé (20) peut être rempli avec de l'air comprimé de l'extérieur de l'unité d'alimentation (10).
